# EUROPEAN PATENT APPLICATION

(11) **EP 1 591 371 A2**
(43) Date of publication of application: **02.11.2005**
(21) Application number: 05252082.2
(22) Date of filing: 01.04.2005
(51) Int. Cl.: B65D 55/02

(54) **Reusable tamper indicator for use with drinks**

(30) Priority: 02.04.2004 GB 0407529
(71) Applicant: Cooper, Annemaria, East Kilbride, Glasgow, G74 4NB (GB)
(72) Inventor: Cooper, Annemaria, East Kilbride, Glasgow, G74 4NB (GB)
(74) Representative: McKechnie, Neil Henry

(57) **Abstract**

The present invention relates to a tamper indicator that can be used with drinks containers (1,1A,1B), such as glasses (1A) and bottles (1B). It describes reusable tamper indicators that can be attached to drinks in bars and other establishments to allow people to leave their drinks securely. The tamper indicator and will notify someone if their drinks have been tampered with in their absence by having a means of visually or aurally indicating the removal of a lid (7) from the drinks container (1, 1A, 1B).

## Description

The present invention relates to a tamper indicator that can be used with drinks containers, such as glasses and bottles. In particular it relates to reusable tamper indicators that can be used in bars and other establishments to allow people to leave their drinks securely, and be notified if their drinks have been tampered with in their absence.

The issue of drinks being spiked, i.e., illicit substances being placed into drinks in public places, is on the increase in the pub, bar and nightclub industry. There have been a number of reported instances where drugs, such as GHB or ketamine, have been placed into drinks that were left unattended at some point. Obviously this is a significant problem, and a number of efforts have been made to try and prevent drink spiking, or to alert people to the fact that their drinks have been tampered with.

In particular, a number of indicator tests, such as dipsticks and paper strips have been developed that a person can place into their drink to determine whether or not any illicit substances are present. However, although this can be useful if a person suspects their drink may have been spiked, it does not help to prevent the spiking of drinks in the first instance, or to alert a person to the potential that their drink may have been spiked. There is also the problem that once these indicator tests have been used, they cannot then be reused. Therefore, if a person wishes to leave their drink, i.e., to go and dance in a club a number of times, they will need to use a number of these dip-in tests which can be very expensive.

It can therefore be seen that it would be beneficial to provide a reusable tamper indicator for use with a drinks container that not only provides an indication that the drink has been tampered with, but also makes it more difficult for someone to slip something into a drink.

It is an object of the present invention to provide an indicator for use with a drinks container that indicates whether a drink has been tampered with.

It is a further object of the present invention to provide a tamper indicator that is reusable.

According to the present invention, there is provided a reusable tamper indicator for use with a drinks container, characterised by the tamper indicator comprising:
- a first section which is securable to a drinks container;
- a second section which is a lid which releasably attaches to the first section so as to restrict access to the drinks container; and
- a resetable indicator means for indicating if the second section is removed from the first section, or the first section removed from the drinks container.

Preferably the tamper indicator further comprises an activating means which activates or deactivates the resetable indicator means.

Preferably the resetable indicator means is an electrical indicator means.

Preferably the first section is in the form of a sleeve.

Preferably, the electrical indicator means is in the form of an LED display.

Another option is that the electrical indicator means is an aural indicator.

Preferably, the electrical indicator means will provide a signal for a pre-selected period of time when first activated.

Preferably, the electrical indicator means will provide a signal for a pre-selected period of time when deactivated.

Preferably, the electrical indicator means incorporates movement sensors which, if movement is detected, trigger the indicator means.

A further option is that the indicator means are triggered by the breaking of an electrical connection.

Optionally, the first section comprises an upper rim which is able to grip the drinks container.

Preferably, the first section comprises a lower rim that is securable to a drinks container.

Preferably, the first section is a net.

Alternatively, the first section is a plastic bag.

Most preferably, the upper rim is provided with an inner gripping section.

Preferably, the lid can be screwed onto the upper rim.

Most preferably, the lid is provided with the electrical indicator means.

Preferably, the activating means is in the form of a key that can be inserted into the lid.

Most preferably, the electrical indicator means is activated by the removal of the key from the lid.

Preferably, the key is provided with a finger loop.

Preferably, the LED display is provided with three differently coloured LEDs.

In order to provide a better understanding of the present invention, we will now describe by way of example only, an embodiment of the invention with reference to the following Figures, in which:
Figure 1 is a front perspective view of the reusable tamper indicator as described in the present invention;
Figure 2 is a side view of a reusable tamper indicator in use on a glass according to the present invention; and
Figure 3 is a top view of the first section of the reusable tamper indicator according to the present invention;
Figures 4A, B, C and D are diagrammatic examples of the activation and deactivation of the LED display according to one embodiment of the present invention, where:

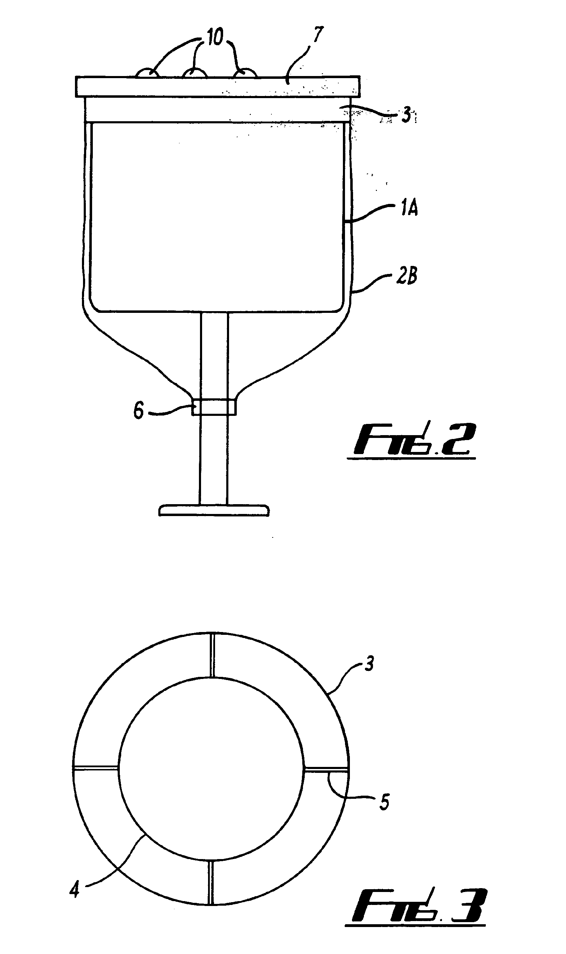

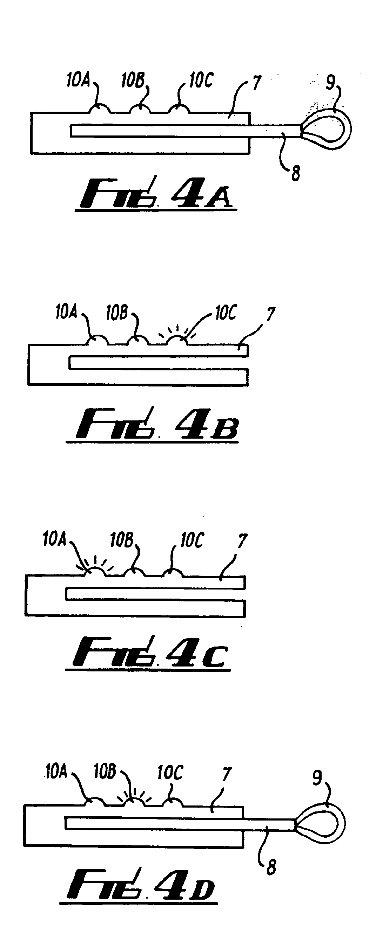

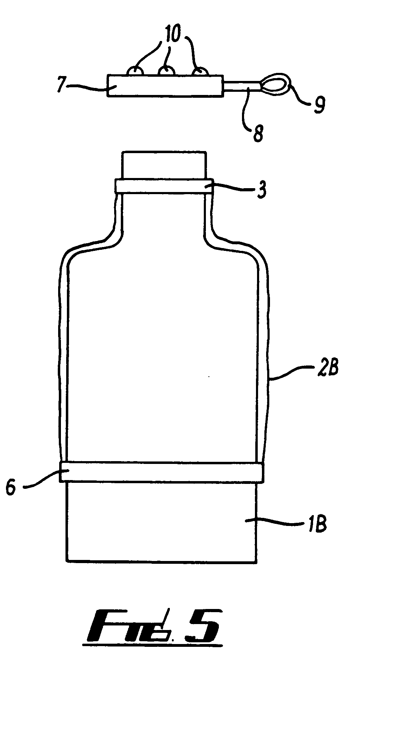

   (a) Figure 4A shows the LED display when the indicator means has not been activated and the key is still in place;
   (b) Figure 4B indicates the LED display for the first minute after the indicator means has been activated by the removal of the key;
   (c) Figure 4C indicates the LED display if the drink has been tampered with; and
   (d) Figure 4D indicates the LED display for the first minute after the key has been replaced to deactivate the indicator means; and
Figure 5 shows an alternative embodiment of the reusable tamper indicator according to the present invention in use on a bottle.

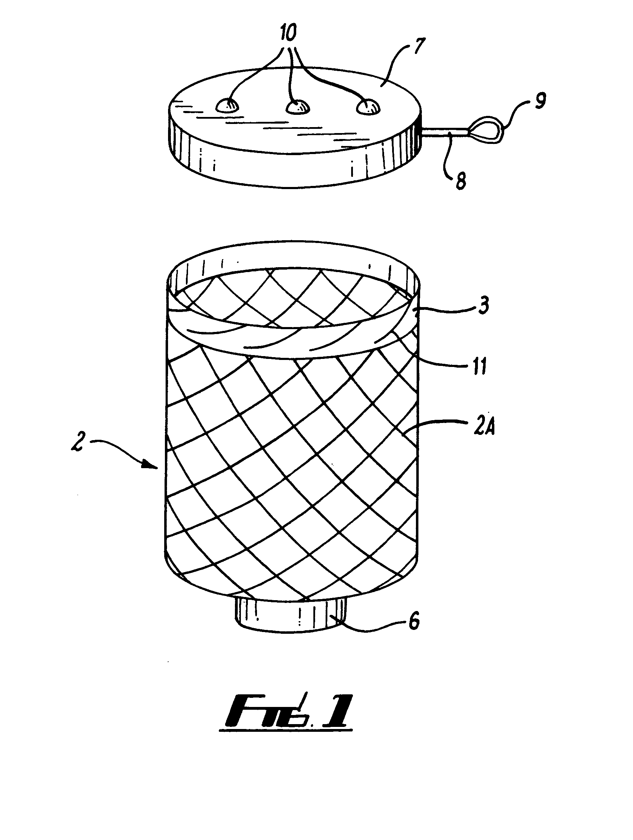

Figure 1 shows a reusable tamper indicator according to the present invention. It can be seen that the tamper indicator comprises a sleeve section 2, which can be in the form of a net 2A, which itself has an upper rim 3 and a lower rim 6. Alternatively the sleeve section 2 can be in the form of a bag 2B made of a suitable plastic material such as polythene. The lower rim 6 is made from a flexible material, such that the lower section or stem of glass 1A can be gripped, as shown in figure 2. The upper rim 3 is formed with male screw sections 11, such that the lid 7 can be screwed on to it.

Figure 3 shows a plan view of the upper screw rim 3, which is made from a rigid plastic material. On the inside of the upper screw rim 3, a number of extendible elements, which in the preferred embodiment are thick plastic bands 5, are joined to an inner gripping band 4 which is placed around the top of the glass 1A.

As the lid 7 is provided with a female inner ridged section, it can be placed on top of the upper rim 3 and turned in a screw-like fashion to close the lid 7 firmly. Incorporated into the lid 7 are a number of LEDs 10 in red 10A, yellow 10B and green 10C colours. The LEDs 10 in the lid 7 run on the power of a small battery which is embedded into the lid 7.

Figure 4A, 4B, 4C and 4D show cross-sections of the lid 7 indicating different signals produced from the LEDs 10.

A key 8 in the form of a plastic rod runs within the lid 7 and connects the three LED bulbs to 10A, 10B and 10C. In an undisturbed state, none of the LEDs 10 on the lid 7 will flash, as can be seen in Figure 4A. However, when the key 8 is removed from the lid 7, the green LED 10C will flash for a short predetermined time, typically of between 10 seconds and 1 minute, to indicate that the tamper indicator has been primed. If the lid 7 is then disturbed, the red light 10A will flash continuously until the key 8 is reinserted, as can be seen in Figure 4c. When the key 8 is reinserted into the lid 7, the yellow LED 10B will flash for a short predetermined time of between 10 seconds and 1 minute. The red LED 10A shown in Figure 4C is primed in the manner that it is activated if any movement to the lid 7 takes place. This may be through the presence of movement sensors, or the breaking of an electric connection. If a drinker returns to a glass 1A and the red LED 10A is flashing, this will act as an indicator that the drink may have been tampered with.

Should a person wish to tamper with the contents of a glass 1A, they would also need to use a key 8 and insert it into the lid 7. In order to return the lid 7 and LEDs 10 to the resting position of no lights showing, the spiker would need to wait for the yellow LED 10B to stop flashing, indicating that a key 8 has been reinserted into the lid 7, and also the green LED 10C to stop flashing, indicating that the key 8 has then been removed from the lid 7 to reactivate the lid. This makes it extremely difficult for the person to carry out any tampering with the drink unseen, and will act as a deterrent. The presence of both the lid 7 and the flashing LEDs 10 all cause attention to be drawn to the person, and a significant amount of time to be taken a serious deterrent to anyone wishing to tamper with a drink.

Different versions of the tamper indicator can be produced. For example, one version may be produced for glasses as shown in Figure 2 and one version for bottles as shown in Figure 5. The upper rim 3 in either case is provided to accommodate either the largest width of any glass 1A or bottle 1B that are likely to be used, and the inner grip band 4 will then adjust to the appropriate size in each case.

Theoretically, the lid 7 does not need to be screwed down, however this is not the preferred embodiment, as it would then be slightly quicker for a person spiking a drink to remove the lid from the sleeve 2A or 2B.

In the preferred embodiment, the lid 7 is approximately one inch deep, such that the upper rim 3 of the sleeve 2A or B does not need to be positioned at the very top of the glass 1A or bottle 1B. This should prevent a drinker from catching their lip on the upper rim 3.

The lid 7 is typically produced from a plastic material which makes it difficult for a spiker to pierce the lid 7 with a hypodermic needle. Also, the lid 7 can display logos, brands and, importantly, can be re-used along with the sleeve section 2 as many times as required.

In the preferred embodiment, the key 8 is provided with a finger loop 9 that allows the person to remove the key 8 from the lid 7 and hold it easily on their finger. The key 8 is typically in the form of a rod which is a soft plastic material to reduce the chance of injury to anyone brushing against it.

The drinks indicator has a number of advantages that makes it attractive for use in the bar and nightclub industry. It provides both a visual aid to indicate if a drink has been tampered with, and also acts as a deterrent to the time required to tamper with a drink. It is also relatively cheap to manufacture, and can be reused, making it attractive to consumers be they bars and nightclubs themselves, or individuals who wish to use the indicator. Furthermore, the flexibility of the sleeve 2 means that the indicator can be compressed when not in use, making it easy to carry around or store.

Further modifications or improvements may be incorporated into the above without departing from the scope of the invention herein intended.

## Claims

1. A reusable tamper indicator for use with a drinks container (1, 1A, 1B), **characterised by** the tamper indicator comprising:
• a first section (2, 2A, 2B) which is securable to a drinks container (1, 1A, 1B);
• a second section (7) which is a lid which releasably attaches to the first section (2, 2A, 2B) so as to restrict access to the drinks container (1, 1A, 1B); and
• a resetable indicator means (10) for indicating if the second section (7) is removed from the first section (2, 2A, 2B), or the first section (2, 2A, 2B) removed from the drinks container (1, 1A, 1B) .

2. A reusable tamper indicator as in Claim 1 which further comprises an activating means (8) which activates or deactivates the resetable indicator means (10).

3. A reusable tamper indicator as in Claims 1 or 2 wherein the resetable indicator means (10) is an electrical indicator means.

4. A reusable tamper indicator as in any of the previous Claims wherein the first section (2, 2A, 2B) is in the form of a sleeve.

5. A reusable tamper indicator as in any of the previous Claims wherein the resetable indicator means (10) is in the form of an LED display (10).

6. A reusable tamper indicator as in any of the previous Claims wherein the resetable indicator means is an aural indicator.

7. A reusable tamper indicator as in any of the previous Claims wherein the resetable indicator means (10) will provide a signal for a pre-selected period of time when first activated.

8. A reusable tamper indicator as in any of the previous Claims wherein the resetable indicator means (10) will provide a signal for a pre-selected period of time when deactivated.

9. A reusable tamper indicator as in any of the previous Claims wherein the resetable indicator means (10) incorporates movement sensors which, if movement is detected, trigger the indicator means (10).

10. A reusable tamper indicator as in any of the previous Claims wherein the resetable indicator means (10) are triggered by the breaking of an electrical connection.

11. A reusable tamper indicator as in any of the previous Claims wherein the first section (2, 2A, 2B) comprises an upper rim (3) which is able to grip the drinks container (1, 1A, 1B).

12. A reusable tamper indicator as in any of the previous Claims wherein the first section (2, 2A, 2B) comprises a lower rim (6) that is securable to a drinks container (1, 1A, 1B).

13. A reusable tamper indicator as in any of the previous Claims wherein the first section is a net (2A) or a plastic bag (2B).

14. A reusable tamper indicator as in any of the previous Claims wherein the upper rim (3) is provided with an inner gripping section (4).

15. A reusable tamper indicator as in any of the previous Claims wherein the lid (7) can be screwed onto the upper rim (3).

16. A reusable tamper indicator as in Claims 2 to 17 wherein the activating means (8) is in the form of a key that can be inserted into the lid (7) and the resetable indicator means (10) is activated by the removal of the key (8) from the lid (7).
